# EUROPÄISCHE PATENTSCHRIFT

(11) **EP 0 695 248 B1**
(45) Veröffentlichungstag und Bekanntmachung des Hinweises auf die Patenterteilung: **09.07.1997**
(21) Anmeldenummer: 94915091.6
(22) Anmeldetag: 22.04.1994
(51) Int. Cl.: B60T 8/00

(54) **SCHALTUNGSANORDNUNG ZUR AUFBEREITUNG UND AUSWERTUNG VON RADSENSORSIGNALEN**
CIRCUIT ARRANGEMENT FOR CONDITIONING AND EVALUATING WHEEL SPEED SENSOR SIGNALS
CIRCUIT PERMETTANT LA MISE EN FORME ET L'EVALUATION DE SIGNAUX PROVENANT DE CAPTEURS DE VITESSE DE ROUE

(30) Priorität: 03.05.1993 DE 4314449
(43) Veröffentlichungstag der Anmeldung: 07.02.1996
(73) Patentinhaber: ITT Automotive Europe GmbH, 60488 Frankfurt am Main (DE)
(72) Erfinder: BURGDORF, Jochen, D-63075 Offenbach (DE); FENNEL, Helmut, D-65812 Bad Soden (DE)
(74) Vertreter: Blum, Klaus-Dieter, Dipl.-Ing.
(86) Internationale Anmeldenummer: EP9401254
(87) Internationale Veröffentlichungsnummer: WO9425319

(56) Entgegenhaltungen:
- DE-A- 3 644 263
- DE-A- 3 917 976
- DE-A- 4 111 515

## Beschreibung

Die Erfindung bezieht sich auf eine Schaltungsanordnung, wie z.B. aus DE-A-3 917 976 bekannt, zur Aufbereitung und Auswertung von das Drehverhalten der einzelnen Räder eines Fahrzeugs wiedergebenden Sensorsignalen und zur Erzeugung eines die Fahrzeuggeschwindigkeit darstellenden Signals, insbesondere für Blockierschutz- oder Antriebsschlupfregelungssysteme, die auch für andere Steuerungs- oder Regelungssysteme des Fahrzeugs auswertbare Geschwindigkeitssignale liefern.

Kraftfahrzeuge werden in zunehmendem Umfang mit elektronischen Regelungs- und Steuerungssystemen unterschiedlicher Art ausgerüstet. Ein wichtiger Bestandteil dieser Systeme sind die Sensoren. Für Antiblockiersysteme (ABS) und zur Antriebsschlupfregelung (ASR) werden bekanntlich Radsensoren verwendet, die elektrische Signale liefern, welche das Drehverhalten der geregelten Räder wiedergeben. Das Drehverhalten der einzelnen Räder läßt dann Rückschlüsse auf die Fahrzeuggeschwindigkeit, Kurven- oder Geradeausfahrt und auf andere fahrzeugdynamische Daten zu. Die Qualität der Sensoren, vor allem die Meßgenauigkeit in den verschiedenen Geschwindigkeitbereichen - kritisch sind insbesondere sehr geringe Geschwindigkeiten -, die Höhe des Nutzsignals und die Zuverlässigkeit der Sensoren, aber auch der Herstellungsaufwand haben in der Praxis großen Einfluß auf die Güte und den Preis der Regelungssysteme.

Die mit den Radsensoren gewonnenen Geschwindigkeitsinformationen werden auch als Regelgrößen für andere Steuerungs- und Regelungssysteme im Kraftfahrzeug benötigt, z.B. für eine Motorsteuerung, eine Getriebesteuerung, für einen Fahrgeschwindigkeitsregler, für elektronische Tachometer und Kilometerzähler usw.. Die Anforderungen der verschiedenen Systeme an die Geschwindigkeitssignale sind allerdings verschieden; z.B. ist für manche Systeme das Messen der Geschwindigkeit bis (nahe) 0 unbedingt erforderlich, während z.B. bei einem ABS der untere Geschwindigkeitsbereich vernachlässigt werden kann.

Für Fahrzeuge mit mehreren Steuerungs- oder Regelungssystemen geht die Entwicklung in Richtung auf Datenaustausch über Kommunikationsnetzwerke, mit dem Ziel, Sensoren, Leitungsverbindungen, Stecker usw. durch Mehrfachnutzung der Sensorsignale einzusparen.

Bei der Mehrfachausnutzung von Geschwindigkeitssignalen tritt das Problem auf, daß einerseits Geschwindigkeiten bis nahezu 0 gemessen werden müssen, daß andererseits jedoch z.B. auf dem elektronischen Tachometer das Durchdrehen der angetriebenen Fahrzeugräder erkennbar sein soll.

Als weitere Schwierigkeit kommt hinzu, daß es in der Praxis aus konstruktiven Gründen und wegen des erforderlichen Herstellungsaufwandes oft nicht möglich ist, alle Fahrzeugräder, insbesondere die angetriebenen und die nichtangetriebenen, mit gleichartigen Sensoren auszurüsten. Die Höhe des Nutzsignals dieser Sensoren in Abhängigkeit von der Geschwindigkeit ist daher in der Regel verschieden, was durch die unvermeidlichen Fertigungs- und Montagetoleranzen noch verstärkt wird. Die Forderung nach einem möglichst hohen Nutzsignal im Geschwindigkeitsbereich nahe 0 und nach Darstellung der Geschwindigkeit der Antriebsräder auf dem Tacho erweist sich daher in der Praxis als Widerspruch, weil häufig gerade die nichtangetriebenen Räder mit den empfindlicheren Sensoren ausgerüstet werden müssen. Der Erfindung liegt die Aufgabe zugrunde, diese Schwierigkeit zu überwinden.

Es hat sich herausgestellt, daß diese Aufgabe mit der im Anspruch 1 beschriebenen Schaltungsanordnung gelöst werden kann. Die Besonderheit dieser Schaltungsanordnung besteht darin, daß diese zunächst selbsttätig den oder die Sensoren ermittelt, die bei sehr niedriger Radgeschwindigkeit, nämlich bei einer Radgeschwindigkeit nahe 0, das höchste Nutzsignal liefern, und daß unterhalb einer vorgegebenen Geschwindigkeitsschwelle das Signal dieses Sensors als Fahrzeuggeschwindigkeitssignal ausgegeben wird, während oberhalb dieser Geschwindigkeitsschwelle das Signal eines an einem angetriebenen Fahrzeugrad angeordneten Sensors als Geschwindigkeitssignal dient.

Bei Verwendung der erfindungsgemäßen Schaltungsanordnung spielt es keine Rolle, ob gleichartige Radsensoren vorhanden sind oder ob z.B. an einem oder beiden nichtangetriebenen Rädern besonders hochwertige Sensoren, die auch bei sehr niedriger Geschwindigkeit ein verwertbares Nutzsignal liefern, montiert sind. Da bei den üblichen Radsensoren die Amplitude des Nutzsignals proportional zur Radgeschwindigkeit ansteigt, bereitet es im höheren Geschwindigkeitsbereich, d.h. oberhalb der vorgegebenen Geschwindigkeitsschwelle, grundsätzlich keine Schwierigkeit, das Ausgangssignal des Sensors auszuwerten.

Nach einem vorteilhaften Ausführungsbeispiel der Erfindung wird der Sensor, der bei niedriger Radgeschwindigkeit das höchste Nutzsignal liefert, fortlaufend oder bei jedem Anfahrvorgang des Fahrzeugs ermittelt. Es ist auch möglich, diesen Selektionsprozeß im Rahmen der Fahrzeugfertigung, z.B. während der Bandendkontrolle, oder in der Werkstatt nach jeder Wartung oder Reparatur des Fahrzeugs durchzuführen.

Die vorgegebene Geschwindigkeitsschwelle liegt vorzugsweise - je nach Fahrzeugart oder Sensorbauart - im Bereich zwischen 5 und 20 km/h, insbesondere zwischen 8 und 12 km/h.

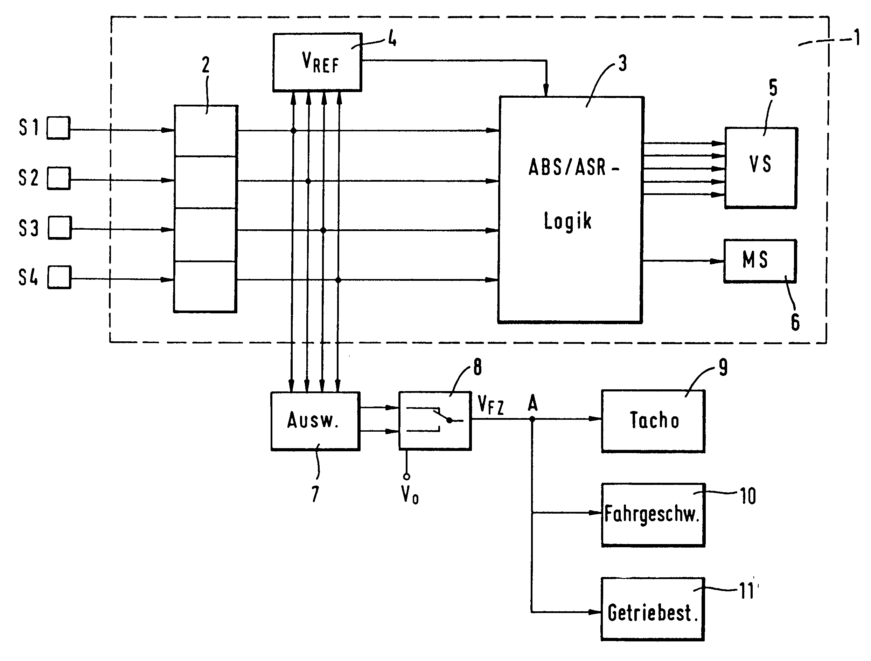

Weitere Merkmale, Vorteile und Anwendungsmöglichkeiten der Erfindung gehen aus der folgenden Beschreibung weiterer Details anhand der beigefügten Abbildung eines Ausführungsbeispiels hervor, das in schematisch vereinfachter Darstellungsweise eine Schaltungsanordnung nach der Erfindung wiedergibt.

In dem dargestellten Ausführungsbeispiel handelt es sich um den elektronischen Teil einer ABS- und ASR-Anlage 1. Zu diesem Antiblockiersystem (ABS) und Antriebsschlupfregelungssystem (ASR) gehören auch Radsensoren S1 bis S4, die üblicherweise in Form von induktiven Meßwertaufnehmern ausgebildet sind. Diese Radsensoren sind in bekannter Weise an einer mit dem Fahrzeugrad umlaufenden Zahnscheibe angeordnet und liefern ein Wechselsignal, dessen Frequenz der Drehgeschwindigkeit des Rades bzw. der Zahnscheibe proportional ist. Da bei solchen bekannten Sensoren durch die Drehbwegung Magnetfeldänderungen in dem induktiven Meßwertaufnehmern oder Sensoren S1 bis S4 hervorgerufen werden, ist grundsätzlich die Amplitude des Ausgangssignals proportional zu der Radgeschwindigkeit. Bei kleinen Radgeschwindigkeiten wird folglich das Nutzsignal sehr klein und liegt in der Größenordnung der unvermeidlichen Störsignale. Durch bestimmte Konstruktionen, präzise Fertigung und genaue Justage des Luftspaltes, also durch erheblichen Aufwand, läßt sich erreichen, daß auch bei sehr niedriger Radgeschwindigkeit noch ein ausreichendes Nutzsignal zur Verfügung steht.

Die Ausgangssignale der Radsensoren S1 bis S4 werden in einer Triggerschaltung 2 aufbereitet. In dem hier beschriebenen Ausführungsbeispiel entsteht eine der Radgeschwindigkeit bzw. dem Raddrehverhalten proportionale Pulsfolge, die dann in einer ABS/ASR-Logik 3 zur Erzeugung von Bremsdrucksteuersignalen ausgewertet werden kann. Durch Vergleich der Pulsfolgen bzw. des Drehverhaltens der einzelnen Räder wird in einer Schaltung 4 eine sogen. Fahrzeugreferenzgeschwindigkeit V_{REF} gebildet. Durch Vergleich der von den einzelnen Rädern bzw. den einzelnen Sensoren S1 bis S4 abgeleiteten Pulsfolgen mit der Fahrzeugreferenzgeschwindigkeit V_{REF} werden in der ABS/ASR-Logik 3 die Betätigungszeiten der (hier nicht gezeigten) Hydraulikventile festgelegt, die letztendlich den Bremsdruck in der gewünschten Weise modulieren. Eine sogen. Ventilsteuerung ist in der Abbildung mit 5 bezeichnet. Ein weiterer Schaltblock 6 symbolisiert eine Motorsteuerung, mit der im Rahmen einer Antriebsschlupfregelung ein Eingriff in das Antriebsmoment des Fahrzeugmotors vorgenommen wird.

Die in dem Trigger 2 der dargestellten ABS/ASR-Schaltung 1 aufbereiteten Geschwindigkeitssignale V_{FZ} werden erfindungsgemäß über einen Auswahlschaltkreis 7 und einen Umschalter 8, Ausgang A ausgegeben und damit einem elektronischen Tacho und anderen Steuerungs- oder Regelungssystemen des Kraftfahrzeugs zur Verfügung gestellt. Ein mit "Vₒ" bezeichneter Anschluß des Umschalters 8 symbolisiert die Vorgabe einer Geschwindigkeitsschwelle; unterhalb dieser Geschwindigkeitssschwelle, d.h. bei Geschwindigkeiten bis nahe 0 km/h, wird das Signal desjenigen Radsensors, der Dank seiner Konstruktion und/oder der günstigen Toleranzen das höchste Nutzsignal liefert, über den Umschalter 8 ausgegeben. Oberhalb der Geschwindigkeitsschwelle Vₒ liegt dagegen am Ausgang A des Umschalters 8 das aufbereitete Signal V_{FZ} eines an einem angetriebenen Rad angeordneten Sensors.

Als Verbraucher für das erfindungsgemäße ausgegebene Geschwindigkeitssignal V_{FZ} sind in der Abbildung symbolisch ein elektronischer Tacho 9, ein Fahrgeschwindigkeitsregler 10 und eine Getriebesteuerung 11 angedeutet.

Zur Ermittlung desjenigen der Radsensoren S1 bis S4, der das höchste Nutzsignal (bei niedriger Geschwindigkeit) liefert, stehen dem Fachmann mehrere Methoden zur Verfügung. Beispielsweise ist es mit Hilfe eines Microprozessors möglich, den Signalpegel der einzelnen Sensoren einer bestimmten Radgeschwindigkeit zuzuordnen und dadurch die Spannungsabgabe des Sensorselementes in Abhängigkeit von der Geschwindigkeit zu berechnen. Dieser Vorgang läßt sich beispielsweise mit einem ohnehin für die Blockierschutzregelung (ABS) oder Antriebsschlupfregelung (ASR) benötigten Microcomputer ausführen. Außer der entsprechenden Ergänzung der Software ist kein zusätzlicher Aufwand erforderlich. Ein weiterer Vorteil dieser Methode besteht darin, daß dieser Auswahlvorgang automatisch bei jedem Anfahrvorgang wiederholt wird.

Andererseits ist es auch möglich, z.B. während der Bandendkontrolle des Fahrzeugs den empfindlichsten Sensor zu ermitteln und diese Information in einem zu dem ABS/ASR-Regler gehörenden Speicher abzulegen. Bei den Wartungsarbeiten oder nach Reparaturen sollte dann überprüft werden, ob nach wie vor der gleiche Sensor das höchste Nutzsignal liefert.

Oberhalb der vorgegeben Geschwindkeitsschwelle Vₒ von z.B. 10 km/h stellt dann der Schalter 8 sicher, daß das von einem angetriebenen Rad stammende Sensorsignal als Geschwindigkeitssignal V_{FZ} ausgegeben wird. Der Tacho 9 wird folglich das "Durchdrehen" eines (angetriebenen) Rades optisch signalisieren. Dies wird häufig gefordert.

## Patentansprüche

1. Schaltungsanordnung zur Aufbereitung und Auswertung von das Drehverhalten der einzelnen Räder eines Fahrzeugs wiedergebenden Sensorsignalen und zur Erzeugung eines die Fahrzeuggeschwindigkeit darstellenden Signals, insbesondere für Blockierschutz- oder Antriebsschlupfregelungssysteme, die auch für andere Steuerungs- oder Regelungssysteme des Fahrzeugs auswertbare Geschwindigkeitssignale liefern, dadurch **gekennzeichnet,** daß der oder die Sensoren (S1 - S4), die bei sehr niedriger Radgeschwindigkeit das höchste Nutzsignal liefern, ermittelt werden und daß unterhalb einer vorgegebenen Geschwindigkeitsschwelle (Vₒ) das Signal dieses Sensors und oberhalb der Geschwindingskeitsschwelle (Vₒ) das Signal eines an einem angetriebenen Fahrzeugrad angeordneten Sensors als Fahrzeuggeschwindigkeitssignal (V_{FZ}) ausgegeben werden.

2. Schaltungsanordnung nach Anspruch 1, dadurch **gekennzeichnet,** daß der bei niedrigerer Radgeschwindigkeit das höchste Nutzsignal liefernde Sensor fortlaufend oder bei jedem Anfahrvorgang des Fahrzeugs ermittelt wird.

3. Schaltungsanordnung nach Anspruch 1, dadurch **gekennzeichnet,** daß der bei niedriger Radgeschwindigkeit das höchste Nutzsignal liefernde Sensor im Rahmen der Fahrzeugfertigung, z.B. während der Bandendkontrolle, ermittelt wird und als maßgebend für die Ausgabe des Fahrzeuggeschwindigkeitsignals (V_{FZ}) im unteren Geschwindigkeitsbereich, d.h. im Geschwindigkeitsbereich unterhalb der Geschwindigkeitsschwelle (Vₒ), festgelegt wird.

4. Schaltungsanordnung nach Anspruch 3, dadurch **gekennzeichnet,** daß bei jeder Wartung oder Reparatur des Fahrzeugs der das höchste Nutzsignal abgebende Sensor erneut ermittelt und festgelegt wird.

5. Schaltungsanordnung nach einem oder mehreren der Ansprüche 1 bis 4, dadurch **gekennzeichnet,** daß als Geschwindigkeitsschwelle (Vₒ) ein Geschwindigkeitswert im Bereich zwischen 5 und 20 km/h, insbesondere zwischen 8 und 12 km/h, vorgegeben wird.

## Claims

1. A circuit arrangement for conditioning and evaluating sensor signals representative of the rotational behavior of the individual wheels of a vehicle and for generating a signal indicative of the vehicle speed, more particularly for use in anti-lock or traction slip control systems, which supply speed signals which can also be evaluated for other vehicle control or regulating systems,
**characterized** in that the sensor or sensors (S1 to S4) supplying the highest useful signal at very low wheel speeds is or are determined, and in that below a predetermined speed threshold (Vₒ) the signal of this sensor and above the speed threshold (Vₒ) the signal of a sensor arranged on a driven vehicle wheel is delivered as a vehicle speed signal (V_{FZ}).

2. A circuit arrangement as claimed in claim 1,
**characterized** in that the sensor supplying the highest useful signal at very low wheel speeds is determined constantly or during each starting operation of the vehicle.

3. A circuit arrangement as claimed in claim 1,
**characterized** in that the sensor supplying the highest useful signal at low wheel speeds is determined during manufacture of the vehicles, for example, during the final check on the assembly line, and is defined as being decisive for the output of the vehicle speed signal (V_{FZ}) in the lower speed range, i.e. in the speed range below the speed threshold (Vₒ).

4. A circuit arrangement as claimed in claim 3,
**characterized** in that the sensor supplying the highest useful signal is again detected and determined during each vehicle maintenance or repair operation.

5. A circuit arrangement as claimed in any one or more of claims 1 to 4,
**characterized** in that a speed value ranging between 5 and 20 km/h, more particularly between 8 and 12 km/h, is predetermined as the speed threshold (Vₒ).

## Revendications

1. Agencement de circuit pour la mise en forme et l'exploitation de signaux de capteur reproduisant le comportement en rotation des différentes roues d'un véhicule et pour la production d'un signal représentant la vitesse du véhicule, notamment pour des systèmes de régulation antiblocage ou de régulation du glissement de traction qui fournissent aussi des signaux de vitesse pouvant être exploités pour d'autres systèmes de commande ou de régulation du véhicule, caractérisé en ce que le ou les capteurs (S1 - S4) qui délivrent le signal utile le plus élevé dans le cas d'une très faible vitesse de roue sont déterminés et en ce qu'au-dessous d'un seuil préfixé de vitesse (Vₒ), c'est le signal de ce capteur et, au-dessus du seuil de vitesse (Vₒ), c'est le signal d'un capteur disposé sur une roue motrice du véhicule, qui est fourni en tant que signal de vitesse de véhicule (V_{FZ}).

2. Agencement de circuit selon la revendication 1, caractérisé en ce que le capteur délivrant le signal utile le plus élevé dans le cas d'une faible vitesse de roue est déterminé d'une manière continue ou à chaque opération de démarrage du véhicule.

3. Agencement de circuit selon la revendication 1, caractérisé en ce que le capteur délivrant le signal utile le plus élevé dans le cas d'une faible vitesse de roue est déterminé dans le cadre de la fabrication du véhicule, par exemple pendant le contrôle de fin de chaîne, et est établi comme déterminant pour la fourniture du signal de vitesse de véhicule (V_{FZ}) dans le domaine inférieur de vitesses, c'est-à-dire dans le domaine de vitesses situé au-dessous du seuil de vitesse (Vₒ).

4. Agencement de circuit selon la revendication 3, caractérisé en ce que le capteur fournissant le signal utile le plus élevé est de nouveau déterminé et établi lors de chaque entretien ou réparation du véhicule.

5. Agencement de circuit selon une ou plusieurs des revendications 1 à 4, caractérisé en ce qu'une valeur de vitesse située dans l'intervalle de valeurs compris entre 5 et 20 km/h, notamment entre 8 et 12 km/h, est préfixée comme seuil de vitesse (Vₒ).
